# EUROPÄISCHE PATENTSCHRIFT

(11) **EP 3 961 036 B1**
(45) Veröffentlichungstag und Bekanntmachung des Hinweises auf die Patenterteilung: **27.03.2024**
(21) Anmeldenummer: 21191038.5
(22) Anmeldetag: 12.08.2021
(51) Int. Cl.: F04C 2/344, F04C 14/22, F16F 1/04

(54) **SCHRAUBENFEDER FÜR EINE PUMPE MIT VERSTELLBAREM FÖRDERVOLUMEN**
HELICAL SPRING FOR A VARIABLE DISPLACEMENT PUMP
RESSORT HÉLICOÏDAL POUR UNE POMPE À DÉBIT DE TRANSPORT RÉGLABLE

(30) Priorität: 28.08.2020 DE 102020122522
(43) Veröffentlichungstag der Anmeldung: 02.03.2022
(73) Patentinhaber: Schwäbische Hüttenwerke Automotive GmbH, 73433 Aalen (DE)
(72) Erfinder: Baur, Winfried, 88499 Altheim (DE); Jäggle, Gerd, 88521 Ertingen (DE); Schilling, Simone, 88422 Ogglshausen (DE); Peters, Sven, 88427 Bad Schussenried (DE); Tontsch, Thomas, 88427 Bad Schussenried (DE)
(74) Vertreter: SSM Sandmair

(56) Entgegenhaltungen:
- WO-A1-2016/182490
- DE-A1- 2 000 472
- DE-A1-102005 033 293
- JP-A- 2019 007 454

## Beschreibung

Aus dem Stand der Technik sind Pumpen, insbesondere Rotationspumpen, mit verstellbarem Fördervolumen bekannt. Derartige Pumpen kommen beispielsweise zur Förderung von Schmieröl zu Verbrauchern im Automobilbereich, insbesondere Motoren, zum Einsatz. Pumpen dieser Bauart verfügen für gewöhnlich über eine Verstelleinrichtung mit Stellstruktur, über welche das Fördervolumen geregelt werden kann. Die Stellstruktur ist zur Regelung des Fördervolumens in dem Pumpengehäuse beweglich, insbesondere schwenkbeweglich, gelagert, wobei die Stellstruktur über ein Stellelement mit einer Stellkraft beaufschlagt wird. In der Regel kommen als Stellelement zylindrische Druckfedern mit konstantem Windungsdurchmesser, sogenannte Schraubenfedern, zum Einsatz. Bedingt durch die Baugröße der Pumpe und insbesondere bedingt durch die Baugröße der Stellstruktur sind diese Federn in ihrer Auflagefläche, d. h. in ihrem äußeren Windungsdurchmesser, begrenzt. Dies führt bei herkömmlichen Pumpen aus dem Stand der Technik häufig zu Schraubenfedern mit einem großen Verhältnis von der Länge der Schraubenfeder L₀ im unbelasteten Zustand zum äußeren Windungsdurchmesser D. Dabei ist ein Verhältnis L₀/D größer 4, insbesondere größer 6, keine Seltenheit.

Derartige Schraubenfedern sind unter axialer Druckbelastung häufig knickanfällig, d. h. die Schraubenfedern unterliegen einem Stabilitätsverlust durch Ausweichen quer zu ihrer Längsrichtung unter axialer Druckbeanspruchung. Ein Knicken der Schraubenfeder kann die Regelbarkeit der Pumpe negativ beeinflussen sowie die Schraubenfeder entweder unmittelbar zerstören oder beansprucht das Federmaterial bei wiederkehrendem Knicken zusätzlich, sodass ein Ermüdungsbruch der Schraubenfeder begünstigt wird. In jedem Fall führt eine kaputte Schraubenfeder zu einem Totalschaden der Pumpe oder zumindest zu einer Fehlfunktion der Pumpe, indem diese beispielsweise frühzeitiger abregelt oder gar nicht mehr regelt.

Die Gefahr des Knickens kann durch die Einbausituation, insbesondere durch die Lagerung, der Schraubenfedern verstärkt werden. So begünstigen nicht parallele Auflageflächen für die Schraubenfeder oder Auflageflächen mit wechselnder Ausrichtung zueinander das Knicken der Schraubenfeder.

Die wechselnde Ausrichtung der Auflageflächen ist insbesondere bei Pumpen mit einer schwenkbeweglichen Stellstruktur ein Problem. Durch die Schwenkbewegung der Stellstruktur werden die vorzugsweise parallel zueinander ausgerichteten Auflageflächen für die Schraubenfeder in einem Winkel zueinander abgelenkt. Dies erzeugt neben einer Kraftkomponente in axialer Richtung der Schraubenfeder zusätzlich eine radiale Kraftkomponente, welche ein Ausweichen der Schraubenfeder quer zu ihrer Längsrichtung zusätzlich begünstigt.

Durch die wechselnde Ausrichtung der Auflageflächen bei schwenkbeweglicher Stellstruktur verkürzt sich der kritische Federweg sₖ, bei welchem es zum Knicken der Feder kommen kann, erheblich. Die Schraubenfeder muss derart ausgelegt werden, dass der Stellweg der Stellstruktur höchstens dem kritischen Federweg der Schraubenfeder entspricht. In bevorzugten Ausführungen muss die Schraubenfeder so ausgelegt werden, dass der Stellweg der Stellstruktur kleiner ist als der kritische Federweg. Dies lässt sich aufgrund des begrenzten Bauraums meist nur durch eine entsprechende Materialwahl der Schraubenfeder oder entsprechend großem Drahtdurchmesser der Schraubenfeder realisieren, wodurch die Schraubenfeder häufig teuer werden oder das Abregelverhalten der Pumpe gegebenenfalls nicht optimal eingestellt werden kann. Lösungen in Form von Dornen oder Hülsen für die Schraubenfeder, welche zur Stabilisierung der Schraubenfeder dienen und ein Knicken der Schraubenfeder unterbinden, können abhängig von der Bauart der Pumpe nicht immer eingesetzt werden und verursachen zudem weitere Kosten.

Aus der DE 10 2005 033 293 A1 ist einer Pumpe mit verstellbarem Fördervolumen bekannt, bei der ein Stellring zum Einstellen des Fördervolumens durch ein kegelstumpfförmiges Federelement mit einer Federkraft beaufschlagt wird. Die WO 2016/162490 A1 zeigt eine weitere Pumpe mit verstellbarem Fördervolumen, bei der ein Rahmen, mit dem das Fördervolumen eingestellt werden kann, in der Bewegungsrichtung von zwei kegelstumpfförmigen Federelementen beaufschlagt wird. Die DE 2 000 472 betrifft allein eine Feder, die rautenförmig ist und deren Materialdurchmesser sich über die Federlänge verändert. Aus der JP 2019 007545A ist eine Pumpe mit verstellbarem Fördervolumen bekannt, mit einer kegelstumpfförmigen Stellfeder für das die Fördermenge einstellende Stellelement.

Es ist daher eine Aufgabe der Erfindung, eine Pumpe mit verstellbarem Fördervolumen kostengünstig bereitzustellen, bei welcher das Risiko eines Pumpenschadens durch Knicken der Schraubenfeder minimiert ist.

Die Aufgabe wird durch Anspruch 1 gelöst.

Eine Pumpe, wie sie die Erfindung betrifft, umfasst ein Pumpengehäuse mit einer Förderkammer, die ein Förderkammereinlass für ein Fluid und ein Förderkammerauslass für das Fluid aufweist. In der Förderkammer ist wenigstens ein drehbares Förderglied, insbesondere ein Förderrotor, zur Förderung des Fluids ausgebildet. In bevorzugten Ausführungen handelt es sich bei der Pumpe um eine Flügelzellenpumpe, wobei das Förderglied einen Förderrotor und wenigstens einen im Förderrotor gleitbeweglich gelagerten Flügel aufweist. Bei weiteren bevorzugten Ausführungen handelt es sich bei der Pumpe um eine Pendelschieberpumpe oder eine Zahnradpumpe, insbesondere Außenzahnradpumpe.

Des Weiteren umfasst die Pumpe eine Verstelleinrichtung mit einer zur Verstellung des Fördervolumens der Pumpe im Pumpengehäuse hin und her beweglich gelagerten Stellstruktur und einer Schraubenfeder zur Beaufschlagung der Stellstruktur mit einer in eine Stellrichtung wirkenden Federkraft. Vorzugsweise handelt es sich bei der Stellstruktur um einen Stellring, welcher vorzugsweise die Förderkammer und das Förderglied in Umfangsrichtung umschließt. Die als Stellring ausgebildete Stellstruktur bildet vorzugsweise die Begrenzung der Förderkammer in radialer Richtung. Der Stellring kann zur Verstellung des Fördervolumens schwenkbar oder linear verstellbar gelagert sein. Insbesondere bei einer Außenzahnradpumpe kann es sich bei der Stellstruktur um einen Stellkolben handeln, welcher vorzugsweise axial zur Förderkammer und zum Förderglied angeordnet ist. Die als Stellkolben ausgebildete Stellstruktur bildet vorzugsweise die Begrenzung der Förderkammer in axialer Richtung. Der Stellkolben kann zur Verstellung des Fördervolumens schwenkbar oder linear verstellbar gelagert sein.

Die Stellstruktur ist vorzugsweise in eine erste Stellrichtung und eine zweite Stellrichtung hin und her beweglich, insbesondere schwenkbeweglich, ausgebildet. Ein Verstellen der Stellstruktur in die erste Stellrichtung bewirkt vorzugsweise ein Abregeln der Pumpe, d. h. eine Reduzierung des Fördervolumens. Entsprechend bewirkt eine Verstellung der Stellstruktur in die zweite Stellrichtung vorzugsweise eine Vergrößerung des Fördervolumens.

Zur Verstellung des Fördervolumens kann die Stellstruktur mit einer Stellkraft beaufschlagt werden, welche vorzugsweise in die erste Stellrichtung wirkt. Die Stellkraft kann beispielsweise durch ein Fluid, insbesondere Hochdruckfluid erzeugt werden, welches auf eine Stellfläche der Stellstruktur wirkt. Vorzugsweise wird eine Stellfläche der Stellstruktur mit Hochdruckfluid von der Hochdruckseite der Pumpe beaufschlagt, insbesondere permanent beaufschlagt. Das Druckfluid kann vom Förderkammerauslass abgezweigt werden und der Stellfläche der Stellstruktur direkt oder beispielsweise über ein Steuerventil zugeführt werden. Alternativ kann die Stellkraft beispielsweise auch durch einen extern geregelten Aktuator erzeugt werden. Dem Fachmann sind Verstelleinrichtungen zur Verstellung des Fördervolumens von Pumpen und insbesondere die Mechanismen zur Erzeugung einer Stellbewegung hinlänglich bekannt, weshalb an dieser Stelle nicht weiter darauf eingegangen werden soll.

In bevorzugten Ausführungen wirkt die Federkraft der Schraubenfeder der Stellkraft entgegen, d. h. in bevorzugten Ausführungen wirkt die Federkraft in Richtung des maximalen Fördervolumens. Abhängig vom Einsatz der Pumpe oder dem gewünschten Regelverhalten der Pumpe ist es auch vorstellbar, dass die Schraubenfeder zur Abregelung der Pumpe dient. Die durch die Schraubenfeder erzeugte Federkraft kann auch in Richtung eines minimalen Fördervolumens und/oder mit der Stellkraft auf die Stellstruktur wirken. Die Erfindung ist nicht auf Druckfedern beschränkt, es können beispielsweise auch Zugfedern zum Einsatz kommen.

Bevorzugt wird die Schraubenfeder durch einen in Federlängsrichtung schraubenlinienförmig gewundenen Runddraht oder Rundstab gebildet. Besonders bevorzugt wird die Schraubenfeder durch einen um eine in Federlängsrichtung gerichtete Achse schraubenlinienförmig gewundenen Runddraht oder Rundstab gebildet. Der Runddraht oder Rundstab kann einen kreisrunden Querschnitt oder ovalen Querschnitt, beispielsweise eiförmigen Querschnitt, aufweisen. In alternativen Ausführungen kann die Schraubenfeder auch aus einem in Federlängsrichtung schraubenlinienförmig gewundenen Draht mit polygonalem Querschnitt, beispielsweise Rechteckquerschnitt, gebildet sein.

Die Windungen der Schraubenfeder werden von einer außen an der Schraubenfeder anliegenden Hüllkurve umschlossen. Die Hüllkurve dient ausschließlich der Beschreibung der Schraubenfeder und ist von theoretischer Natur. Die Hüllkurve soll insbesondere nicht mit Hülsen zur Stabilisierung von Schraubenfedern gleichgesetzt werden.

Die Hüllkurve wird insbesondere durch eine tangentiale in radialer Richtung äußere Verbindung jeweils zweier in Längsrichtung benachbarter Windungen der Schraubenfeder gebildet, wobei auch die Oberfläche des Schraubendrahts Teil der Hüllkurve sein kann. Die Hüllkurve bildet sozusagen die dreidimensionale Form der Schraubenfeder ab, wobei der Freiraum zwischen zwei benachbarten Windungen tangential überbrückt wird.

Die Hüllkurve umschließt alle Windungen der Schraubenfeder, insbesondere im unbelasteten Zustand der Schraubenfeder. So ist eine in Federlängsrichtung zentral gelegene Windung im Längsschnitt der Schraubenfeder tangential jeweils mit zwei benachbarten Windungen durch eine erste Tangente und eine zweite Tangente verbunden. Liegen der Berührpunkt der ersten Tangente und der Berührpunkt der zweiten Tangente nicht im gleichen Punkt der Oberfläche des Schraubendrahts, so bildet die Oberfläche zwischen dem ersten Berührpunkt und dem zweiten Berührpunkt ebenfalls einen Teil der Hüllkurve.

Die Hüllkurve einer Schraubenfeder, wie sie beispielsweise im Stand der Technik zum Einsatz kommt, wird beispielsweise durch einen Kreiszylinder gebildet. In diesem Fall haben die erste Tangente und die zweite Tangente im Längsschnitt der Schraubenfeder den gleichen Berührpunkt mit einer zentral gelegenen Windung. Dies führt dazu, dass der äußere Windungsdurchmesser aller Windungen und auch die quer zur Federlängsrichtung gemessene Querschnittsfläche der Hüllkurve in jedem Punkt der Schraubenfeder gleich groß sind.

Bei der erfindungsgemäßen Schraubenfeder ändert sich die quer zur Federlängsrichtung gemessene Querschnittsfläche der Hüllkurve in Federlängsrichtung fortschreitend. Die quer zur Federlängsrichtung gemessene Querschnittsfläche der Hüllkurve nimmt in Federlängsrichtung zu- und/oder ab.

Bevorzugt nimmt die Querschnittsfläche der Hüllkurve in Federlängsrichtung über die gesamte Länge der Schraubenfeder oder wenigstens in einem Abschnitt monoton ab oder zu. Unter einer monotonen Zu- oder Abnahme der Querschnittsfläche wird ein monotones Verhalten im mathematischen Sinne verstanden. Die Querschnittsfläche der Hüllkurve nimmt in Federlängsrichtung vorzugsweise immer zu oder ab oder bleibt gleich. Die Querschnittsfläche der Hüllkurve kann über die gesamte Länge der Schraubenfeder oder wenigstens in einem Abschnitt monoton oder streng monoton zu- oder abnehmen. Unter einer streng monotonen Zu- oder Abnahme wird ein streng monotones Verhalten im mathematischen Sinne verstanden. Die Querschnittsfläche der Hüllkurve nimmt in Federlängsrichtung immer zu oder ab.

Dies bedeutet, dass bei einer streng monotonen Zu- oder Abnahme der Querschnittsfläche zwei in Federlängsrichtung benachbarte Querschnittsflächen der Hüllkurve immer eine unterschiedliche Größe aufweisen. Während bei einer monotonen Zu- oder Abnahme der Querschnittsfläche der Hüllkurve zwei in Federlängsrichtung benachbarte Querschnittsflächen die gleiche Größe aufweisen können, wobei die Hüllkurve in Federlängsrichtung bezogen auf die gesamte Länge der Schraubenfeder oder bezogen auf den monoton zunehmenden oder abnehmenden Abschnitt wenigstens eine maximale Querschnittsfläche und eine minimale Querschnittsfläche aufweist.

Die Hüllkurve kann in Federlängsrichtung aus mehreren Abschnitten bestehen, wobei die Querschnittsfläche der Hüllkurve beispielsweise in einem ersten Abschnitt monoton oder streng monoton zunimmt und in einem zweiten Abschnitt monoton oder streng monoton abnimmt. Die Anzahl der Abschnitte ist dabei nicht auf zwei beschränkt. In bevorzugten Ausführungen weist die Schraubenfeder einen ersten Abschnitt mit monoton, beispielsweise streng monoton, zunehmender Querschnittsfläche und einen an den ersten Abschnitt angrenzenden zweiten Abschnitt mit monoton, beispielsweise streng monoton, abnehmender Querschnittsfläche auf. Der erste Abschnitt und der zweite Abschnitt bilden bevorzugt zusammen einen bezogen auf die Federlängsrichtung konkaven Abschnitt der Hüllkurve.

Bezogen auf die Federlängsrichtung weist die Hüllkurve bevorzugt wenigstens einen konkaven auf, wobei sich der konkave Abschnitt der Hüllkurve über die gesamte Länge der Schraubenfeder erstrecken kann. Ein konkaver Abschnitt der Hüllkurve ist in Umfangsrichtung der Schraubenfeder überall konkav.

Wenn von einem bezogen auf die Federlängsrichtung konkaven Abschnitt der Hüllkurve die Rede ist, bedeutet dies, dass die Querschnittsfläche der Hüllkurve in Federlängsrichtung entlang des konkaven Abschnittes monoton zunimmt und anschließend an die Zunahme wieder monoton abnimmt. Unter einem konkaven Verlauf der Hüllkurve wird in Seitenansicht auf die Schraubenfeder vorzugsweise eine Ausbauchung verstanden. Vorzugsweise nimmt die Querschnittsfläche bei einem konkaven Verlauf streng monoton zu und wieder ab.

Die Querschnittsfläche zu Beginn des konkaven Abschnitts kann im Vergleich zur Querschnittsfläche am Ende des konkaven Abschnitts gleich groß oder unterschiedlich groß sein. Bevorzugt ist die Querschnittsfläche zu Beginn des konkaven Abschnitts gleich groß wie die Querschnittsfläche am Ende des konkaven Abschnitts. In alternativen Ausführungen kann die Querschnittsfläche am Ende des konkaven Abschnitts kleiner oder größer sein als die Querschnittsfläche zu Beginn des konkaven Abschnitts.

Gemäß der Erfindung ist die Hüllkurve der Schraubenfeder in Federlängsrichtung durchgängig konkav. D. h. die Hüllkurve weist ausschließlich einen konkaven Abschnitt auf, welcher sich in Federlängsrichtung von einem ersten Windungsende der Schraubenfeder bis zu einem zweiten Windungsende der Schraubenfeder erstreckt. Die Querschnittsfläche der Hüllkurve kann am ersten Windungsende eine andere Größe aufweisen wie die Querschnittsfläche am zweiten Windungsende der Schraubenfeder. Bevorzugt weist die Querschnittsfläche an dem ersten Windungsende der Schraubenfeder die gleiche Größe auf wie die Querschnittsfläche an dem zweiten Windungsende der Schraubenfeder.

Der Krümmungsradius der Hüllkurve weist vom Betrag her über die gesamte Länge der Schraubenfeder wenigstens die Größe des Drahtdurchmessers des Federdrahts auf. In bevorzugten Ausführungen ist der Krümmungsradius der Hüllkurve vom Betrag her überall größer als 3 mm. Besonders bevorzugt weist die Hüllkurve in Federlängsrichtung vom einem ersten Windungsende der Schraubenfeder bis zu einem zweiten Windungsende der Schraubenfeder überall einen Krümmungsradius auf, welcher vom Betrag her größer ist als die halbe Länge der Schraubenfeder.

Vorzugsweise ändert sich die quer zur Federlängsrichtung gemessene Querschnittsfläche in Federlängsrichtung nur in ihrer Größe. Die Form der quer zur Längsrichtung gemessenen Querschnittsfläche bleibt vorteilhaft gleich. Grundsätzlich ist auch denkbar, dass sich neben der Größe der Querschnittsfläche auch die Form der Querschnittsfläche in Federlängsrichtung ändert. Beispielsweise kann die Hüllkurve in Federlängsrichtung in einem ersten Endabschnitt der Schraubenfeder und einem zweiten Endabschnitt der Schraubenfeder eine andere Form als im Bereich zwischen dem ersten Endabschnitt und dem zweiten Endabschnitt
aufweisen. Besonders bevorzugt weist die Hüllkurve in Federlängsrichtung überall eine kreisförmige Querschnittsfläche auf.

In bevorzugten Ausführungen ist die Querschnittsfläche der Hüllkurve an einem ersten Windungsende der Schraubenfeder und die Querschnittsfläche der Hüllkurve an einem zweiten Windungsende der Schraubenfeder gleich groß. In besonders bevorzugten Ausführungen weist die Querschnittsfläche der Hüllkurve an dem ersten Windungsende der Schraubenfeder die gleiche Größe und die gleiche Form auf wie die Querschnittsfläche der Hüllkurve an dem zweiten Windungsende der Schraubenfeder.

Die Querschnittsfläche der Hüllkurve in Federlängsrichtung ist in einem mittleren Bereich der Schraubenfeder maximal. Der mittlere Bereich der Schraubenfeder erstreckt sich vorzugsweise über eine komplette Windung der Schraubenfeder.

Vorteilhafterweise weist die Hüllkurve in Federlängsrichtung eine Querschnittsfläche mit einer weitesten Erstreckung, welche kleiner 5 cm ist, und/oder eine Querschnittsfläche mit einer kleinsten Erstreckung, welche größer 0,5 cm ist, auf. Dabei wird unter der weitesten Erstreckung die quer zur Federlängsrichtung gemessene größte Länge und unter der kleinsten Erstreckung die quer zur Federlängsrichtung gemessene kleinste Länge verstanden. In bevorzugten Ausführungen ist die Querschnittsfläche der Hüllkurve in jeder Ebene in der Federlängsrichtung kreisförmig, sodass die größte Erstreckung und die kleinste Erstreckung jeweils dem Durchmesser der Querschnittsfläche in der Ebene mit der weitesten Erstreckung bzw. in der Ebene mit der kleinsten Erstreckung entspricht. Die Hüllkurve weist in Federlängsrichtung bevorzugt eine Querschnittsfläche mit einem Durchmesser kleiner 5 cm auf und eine Querschnittsfläche mit einem Durchmesser größer 0,5 cm auf.

In alternativen Ausführungen kann die Hüllkurve in jeder Ebene der Federlängsrichtung elliptisch sein, sodass die größte Erstreckung der Hauptachse und die kleinste Erstreckung der Nebenachse der Ellipse entspricht. Die Hüllkurve in einer Ebene kann eine Querschnittsfläche aufweisen, deren kleinste Erstreckung größer 0,5 cm ist und deren größte Erstreckung kleiner 5 cm ist.

Bevorzugt ist die Hüllkurve spiegelsymmetrisch, wobei eine erste Ebene, welche quer zur Federlängsrichtung verläuft und die Schraubenfeder mittig teilt, die Symmetrieebene der Hüllkurve bildet, und/oder die Hüllkurve ist zu einer zweiten Ebene, welche in Federlängsrichtung verläuft und die Schraubenfeder quer zur Federlängsrichtung mittig teilt, spiegelsymmetrisch. Besonders bevorzugt ist die Hüllkurve rotationssymmetrisch, wobei die Längsachse der Schraubenfeder die Symmetrieachse der Hüllkurve bildet. Bevorzugt ist die Hüllkurve bezogen auf die erste Ebene, welche quer zur Federlängsrichtung verläuft und die Schraubenfeder mittig teilt, spiegelsymmetrisch und zu der Längsachse der Schraubenfeder rotationssym metrisch.

Die Hüllkurve kann zumindest im unbelasteten Zustand der Schraubenfeder in Form einer Tonne ausgebildet sein. Unter einer tonnenförmigen Hüllkurve wird vorzugsweise eine Hüllkurve verstanden, welche über die gesamte Länge der Schraubenfeder einen konkaven Verlauf aufweist.

Vorteilhafterweise weist die Schraubenfeder wenigstens zwei federnde Windungen auf und zwei nicht federnde Windungen auf. Die Schraubenfeder weist vorzugsweise insgesamt wenigstens vier Windungen auf. Die nicht federnden Windungen sind bevorzugt am ersten Windungsende und am zweiten Windungsende der Schraubenfeder ausgebildet, wobei die federnden Windungen zwischen dem ersten

Windungsende und dem zweiten Windungsende ausgebildet sind. Besonders bevorzugt beträgt die Anzahl der federnden Windungen ein Vielfaches der Anzahl der nicht federnden Windungen.

Bevorzugt sind die Stirnfläche der Schraubenfeder am ersten Windungsende und Stirnfläche der Schraubenfeder am zweiten Windungsende parallel zueinander. Die Windung am ersten Windungsende und die Windung am zweiten Windungsende können plangeschliffen sein. Bevorzugt werden die erste Windung und die zweite Windung auf ein Viertel des Drahtdurchmessers der Schraubenfeder plangeschliffen.

In bevorzugten Ausführungen ist die Windungssteigung der federnden Windungen der Schraubenfeder im unbelasteten Zustand der Schraubenfeder konstant. Besonders bevorzugt ist die Windungssteigung der federnden Windungen der Schraubenfeder im unbelasteten Zustand der Schraubenfeder kleiner 1 cm. Die Windungssteigung der nicht federnden Windungen kann kleiner oder gleich groß der Windungssteigung der federnden Windungen sein.

Bevorzugt ist die Schraubenfeder durch eine Schraubendruckfeder ausgebildet, deren Kennlinie einen linearen Abschnitt und einem progressiven Abschnitt aufweist. Im Bereich des linearen Kennlinienabschnitts nehmen die Belastung und die Verformung der Feder vorzugsweise proportional zu, während im Bereich des progressiven Kennlinienabschnitts die Belastung stärker zunimmt als die Verformung. Im progressiven Kennlinienabschnitt wird die Feder mit steigender Belastung vorteilhaft härter. Alternativ kann die Schraubenfeder als Schraubendruckfeder ausgebildet sein, deren Kennlinie durchgängig linear oder progressiv ist.

Je nach Ausgestaltung der Schraubenfeder kann sich die Schraubenfeder anfänglich linear verformen und bei weiterer Belastung progressiv verhalten. Dies ist insbesondere bei Schraubenfedern der Fall, deren Hüllkurve in Form einer Tonne ausgebildet ist. Dies geschieht insbesondere dadurch, dass die einzelnen Windungen durch den
unterschiedlichen Windungsdurchmesser ganz oder teilweise ineinander eintauchen können. Die Windungen können in radialer Sicht vorzugsweise sich ganz oder teilweise überlappen. Auf diese Weise kann der Federweg vorzugsweise verlängert werden, ohne dass die Schraubenfeder knicken kann. Die Schraubenfeder stabilisiert sich somit bei zunehmendem Federweg selbst.

Vorzugsweise wird die Schraubenfeder in der Pumpe derart eingebaut, dass der Stellweg der Stellstruktur kleiner ist als der Federweg im Bereich der linearen Kennlinie. Die Schraubenfeder wird vorzugsweise derart eingebaut, dass bei einer maximalen Verstellung der Stellstruktur die Windungen nicht ineinander eintauchen, d.h., dass die Windungen sich in radialer Sicht vorzugsweise nicht überlappen. Alternativ kann die Schraubenfeder in der Pumpe derart eingebaut sein, dass der Stellweg der Stellstruktur größer ist als der Federweg im Bereich der linearen Kennlinie. Dies bedeutet, dass bei einer maximalen Verstellung der Stellstruktur die Windungen ineinander eintauchen.

Die Pumpe ist insbesondere für den Einsatz in einem Kraftfahrzeug vorgesehen. Sie ist bevorzugt als eine Kraftfahrzeugpumpe ausgebildet. Die Pumpe ist vorzugsweise zur Förderung einer Flüssigkeit, insbesondere eines Schmier-, Kühl- und/oder Betätigungsmittels, vorgesehen. Vorzugsweise ist sie als eine Flüssigkeitspumpe ausgebildet. Die Pumpe ist vorzugsweise zur Versorgung, Schmierung und/oder Kühlung eines Kraftfahrzeugantriebsmotors oder eines Kraftfahrzeuggetriebes vorgesehen. Vorzugsweise wird das Fluid durch ein Öl, insbesondere als ein Motorschmieröl oder Getriebeöl, gebildet. Die Pumpe kann als eine Motorschmiermittelpumpe für ein Kraftfahrzeug oder als eine Getriebepumpe für ein Kraftfahrzeug ausgebildet sein. In weiteren Verwendungen kann sie eine Getriebepumpe für Getriebe von Windkraftanlagen sein.

Die Erfindung wird nachfolgend anhand von Ausführungsbeispielen erläutert. An den Ausführungsbeispielen der Figuren 1, 2, 8 und 10 offenbarte Merkmale bilden die Gegenstände der Ansprüche und auch die vorstehenden erläuterten Ausgestaltungen vorteilhaft weiter.

Es zeigen:
- Figur 1:: Querschnitt einer Pumpe mit verbauter Schraubenfeder eines ersten Ausführungsbeispiels
- Figur 2:: Längsschnitt einer Schraubenfeder des ersten Ausführungsbeispiels
- Figur 3:: schematischer Längsschnitt der Schraubenfeder eines zweiten nicht beanspruchten Ausführungsbeispiels
- Figur 4:: schematischer Längsschnitt der Schraubenfeder eines dritten nicht beanspruchten Ausführungsbeispiels
- Figur 5:: schematischer Längsschnitt der Schraubenfeder eines vierten nicht beanspruchten Ausführungsbeispiels
- Figur 6:: schematischer Längsschnitt der Schraubenfeder eines fünften nicht beanspruchten Ausführungsbeispiels
- Figur 7:: schematischer Längsschnitt der Schraubenfeder eines sechsten nicht beanspruchten Ausführungsbeispiels
- Figur 8:: schematischer Längsschnitt der Schraubenfeder eines siebten Ausführungsbeispiels
- Figur 9:: nicht beanspruchte zylindrische Schraubenfeder auf Block belastet
- Figur 10:: Tonnenfeder des ersten Ausführungsbeispiels auf Block belastet

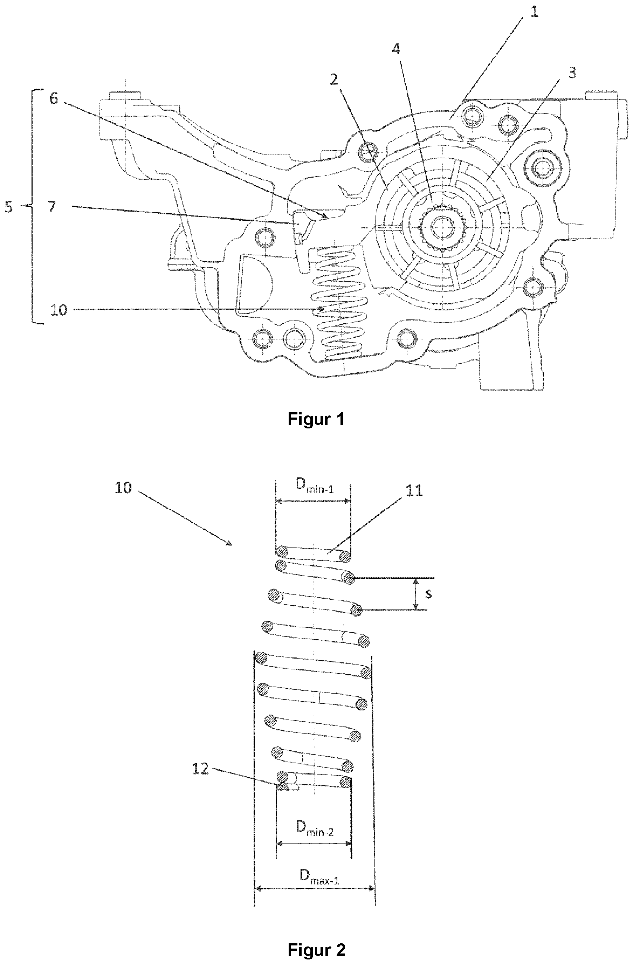

Figur 1 zeigt einen Querschnitt einer Pumpe mit einer Schraubenfeder 10 gemäß dem ersten Ausführungsbeispiel. Die Pumpe umfasst ein Pumpengehäuse 1 mit einem Förderglied 4, welches Fluid von einem Förderkammereinlass 2 zu einem Förderkammerauslass 3 fördert, und einer Verstelleinrichtung 5 zur Verstellung des Fördervolumens der Pumpe. Bei der gezeigten Pumpe handelt es sich um eine Flügelzellenpumpe, deren Förderglied 4 durch einen Förderrotor mit radial beweglichen gelagerten Flügeln gebildet wird. Für den Fachmann ist es ersichtlich, dass sich die Erfindung nicht auf Flügelzellenpumpen beschränkt und auch bei anderen Pumpen mit Verstelleinrichtung zum Einsatz kommen kann.

Die Verstelleinrichtung 5 umfasst eine Stellstruktur 7 mit wenigstens einer Stellfläche 6 und einer Schraubenfeder 10. In der vorliegenden Ausführung wird die Stellfläche 6 mit Hochdruckfluid der Pumpe beaufschlagt, wodurch in Abhängigkeit des Fluiddrucks auf der Hochdruckseite der Pumpe 1 eine Stellkraft auf die Stellstruktur 7 ausgeübt wird. Die Stellkraft wirkt der Federkraft der Schraubenfeder 10 entgegen, sodass die Stellstruktur bei einem Kräfteungleichgewicht zwischen Federkraft und Stellkraft in dem Pumpengehäuse verschwenkt wird. Die Stellkraft wirkt dabei in Richtung eines minimalen Fördervolumens auf die Stellstruktur und die Federkraft in Richtung eines maximalen Fördervolumens.

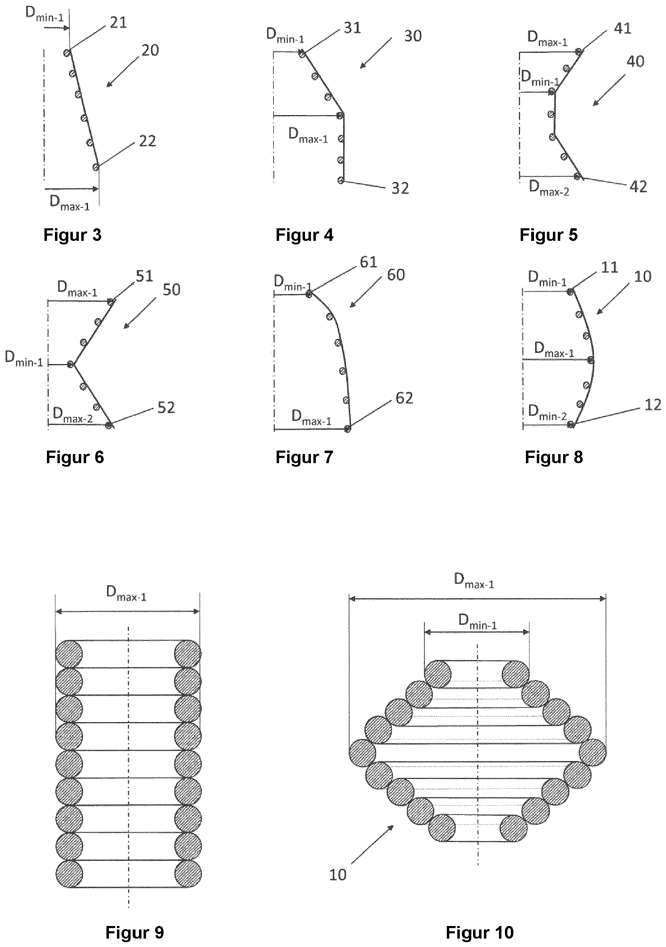

Im Ausführungsbeispiel der Figur 1 ist eine sogenannte Tonnenfeder verbaut, welche in Figur 2 in einem Längsschnitt und in Figur 8 in einem schematischen Längsschnitt mit von außen an der Schraubenfeder 10 anliegender Hüllkurve dargestellt ist. Neben der dargestellten Schraubenfeder 10 des ersten Ausführungsbeispiels können auch die Federn der Ausführungsbeispiele der Figuren 3 bis 7 in der Pumpe verbaut werden.

Die Hüllkurve der Schraubenfeder 10 ist bezogen auf die Federlängsrichtung über die gesamte Länge der Schraubenfeder 10 konkav ausgebildet. D. h. die Querschnittsfläche der Hüllkurve nimmt ausgehend von einem ersten Windungsende 11 in Richtung des zweiten Windungsendes 12 bis zu einem mittleren Bereich der Schraubenfeder 10 zu. Im mittleren Bereich der Schraubenfeder 10 weist die Querschnittsfläche der Schraubenfeder 10 gemessen quer zur Federlängsrichtung der Schraubenfeder 10 ihre weiteste Erstreckung Dₘₐₓ₋₁ auf. Ausgehend von dem mittleren Bereich der Schraubenfeder 10 nimmt die Querschnittsfläche der Hüllkurve in Richtung des zweiten Windungsendes 12 wieder ab.

Die Querschnittsfläche der Hüllkurve nimmt vom ersten Windungsende 11 bis zum mittleren Bereich der Schraubenfeder 10 monoton zu, und ausgehend vom mittleren Bereich der Schraubenfeder 10 bis zum zweiten Windungsende 12 nimmt die Querschnittsfläche der Hüllkurve monoton ab. Die Windung des ersten Windungsendes 11 und die Windung des zweiten Windungsendes 12 sind bei dem vorliegenden Ausführungsbeispiel nicht federnde Windungen. Die Hüllkurve kann im Bereich der nicht federnden Windungen einen zur Federlängsachse parallelen Verlauf aufweisen.

Die Querschnittsfläche der Hüllkurve hat ihre kleinste Erstreckung Dₘᵢₙ₋₁ am ersten Windungsende 11 und am zweiten Windungsende 12. Die Querschnittsfläche der Hüllkurve ist dabei am ersten Windungsende 11 gleich groß wie die Querschnittsfläche am zweiten Windungsende 12.

Die Hüllkurve der Schraubenfeder 10 ist bezogen auf die Längsachse der Schraubenfeder 10 rotationssymmetrisch. D. h. die Querschnittsfläche ist in Federlängsrichtung überall kreisförmig ausgebildet, sodass die weiteste Erstreckung Dₘₐₓ₋₁ und die kleinste Erstreckung Dₘᵢₙ₋₁ jeweils dem Durchmesser der Querschnittsfläche im Bereich der weitesten Erstreckung Dₘₐₓ₋₁ bzw. der kleinsten Erstreckung Dₘᵢₙ₋₁ entsprechen. Zudem ist die Hüllkurve der Schraubenfeder 10 spiegelsymmetrisch, wobei die Symmetrieebene quer zur Längsachse der Schraubenfeder 10 verläuft und die Schraubenfeder 10 in Federlängsrichtung mittig teilt.

Die Schraubenfeder 10 weist zwei nicht federnde Windungen auf, wobei die erste nicht federnde Windung am ersten Windungsende 11 und die zweite nicht federnde Windung am zweiten Windungsende 12 ausgebildet ist. Wie in Figur 2 am zweiten Windungsende 12 dargestellt, sind die nicht federnden Windungen plangeschliffen, sodass die Stirnfläche der Schraubenfeder 10 am ersten Windungsende 11 zu der Stirnfläche am zweiten Windungsende 12 der Schraubenfeder 10 parallel ist.

In Figur 3 ist ein schematischer Längsschnitt einer weiteren Ausführungsform zu sehen. Die Schraubenfeder 20 der zweiten Ausführungsform kann dabei die Schraubenfeder 10 in der Pumpe aus Figur 1 ersetzen. Der Längsschnitt der Schraubenfeder 20 ist für eine bessere Übersicht nur zu einer Seite der Längsachse der Schraubenfeder 20 dargestellt.

Im Gegensatz zu dem Ausführungsbeispiel der Schraubenfeder 10 ist die Hüllkurve der Schraubenfeder 20 ein Kegelstumpf. D. h. die Hüllkurve der Schraubenfeder 20 weist über die gesamte Länge einen geraden Verlauf mit konstanter Steigung auf, wobei die Steigung bezogen auf die Längsachse der Schraubenfeder 20 vom Betrag her bevorzugt überall größer 0 ist. Dabei nimmt die Querschnittsfläche der Hüllkurve von einem ersten Windungsende 21 zu einem zweiten Windungsende 22 monoton zu. Im vorliegenden Fall ist die Zunahme der Querschnittsfläche streng monoton, d. h. zwei in Federlängsrichtung benachbarte Querschnittsflächen weisen nie die gleiche Größe auf.

Die Hüllkurve der Schraubenfeder 20 ist bezüglich der Längsachse der Schraubenfeder 20 rotationssymmetrisch. Im Gegensatz zu dem ersten Ausführungsbeispiel der Schraubenfeder 10 ist die Hüllkurve der Schraubenfeder 20 nicht spiegelsymmetrisch.

Die Hüllkurve weist die Querschnittsfläche mit der kleinsten Erstreckung Dₘᵢₙ₋₁ am ersten Windungsende 21 und die Querschnittsfläche mit der weitesten Erstreckung Dₘₐₓ₋₁ am zweiten Windungsende 22 auf. Zwischen dem ersten Windungsende 21 und dem zweiten Windungsende 22 nimmt die Querschnittsfläche streng monoton zu. Die Querschnittsfläche der Hüllkurve der Schraubenfeder 20 ist kreisförmig ausgebildet.

Figur 4 zeigt ein weiteres Ausführungsbeispiel einer Schraubenfeder 30, wobei die Querschnittsfläche der Hüllkurve monoton zunimmt. Die Schraubenfeder 30 weist einen ersten Federabschnitt auf, welcher von dem ersten Windungsende 31 bis zum mittleren Abschnitt der Schraubenfeder 30 reicht. Dies soll nur als beispielhafte Ausführungsform verstanden werden. So kann der erste Abschnitt der Hüllkurve der Schraubenfeder 30 in Federlängsrichtung kürzer oder länger bemessen sein.

Die Hüllkurve der Schraubenfeder 30 weist im ersten Abschnitt eine konstante Steigung auf, welche bezogen auf die Längsachse der Schraubenfeder 30 vom Betrag her größer 0 ist. So ist der erste Abschnitt der Hüllkurve der Schraubenfeder 30 in Form eines Kegelstumpfs ausgebildet. An den ersten Abschnitt schließt sich in Federlängsrichtung ein zweiter Abschnitt in Richtung des zweiten Windungsendes 32 an. Dabei bleibt die Querschnittsfläche der Hüllkurve im Bereich des zweiten Abschnitts konstant. Die Hüllkurve weist in ihrem zweiten Abschnitt eine kreiszylindrische Form auf, d.h. die Hüllkurve weist in ihrem zweiten Abschnitt eine konstante Steigung gleich 0 auf.

Die Querschnittsfläche der Hüllkurve der Schraubenfeder 30 weist ihre kleinste Erstreckung Dₘᵢₙ₋₁ am ersten Windungsende 31 auf. Von dem ersten Windungsende 31 ausgehend nimmt die Querschnittsfläche der Hüllkurve bis zu der Querschnittsfläche der Hüllkurve der Schraubenfeder 30 mit der weitesten Erstreckung Dₘₐₓ₋₁ streng monoton zu. Während die Querschnittsfläche der Hüllkurve der Schraubenfeder 30 innerhalb des ersten Abschnitts streng monoton zunimmt, ist die Zunahme der Querschnittsfläche über die gesamte Länge der Schraubenfeder 30 nur monoton.

Die Hüllkurve der Schraubenfeder 30 ist ebenfalls rotationssymmetrisch bezüglich der Längsachse der Schraubenfeder 30. Die Querschnittsfläche der Hüllkurve der Schraubenfeder 30 ist überall kreisförmig ausgebildet. Dabei ist die Querschnittsfläche der Hüllkurve am ersten Windungsende 31 kleiner als die Querschnittsfläche der Hüllkurve am zweiten Windungsende 32.

Das Ausführungsbeispiel der Figur 5 zeigt eine Schraubenfeder 40, deren Hüllkurve in Form einer Sanduhr gestaltet ist. D. h. die Hüllkurve der Schraubenfeder 40 weist einen ersten Abschnitt auf, in welchem die Querschnittsfläche der Hüllkurve streng monoton abnimmt, und einen zweiten Abschnitt, in welchem die Querschnittsfläche der Hüllkurve streng monoton zunimmt. Die Hüllkurve der Schraubenfeder 40 weist im Bereich des ersten Abschnitts und im Bereich des zweiten Abschnitts einen geraden Verlauf mit konstanter Steigung auf, welche bezogen auf die Längsachse der Schraubenfeder 40 vom Betrag her größer 0 ist. Vorzugsweise ist die Steigung im ersten Abschnitt vom Betrag her gleich groß wie die Steigung im zweiten Abschnitt. In alternativen Ausführungen kann der Betrag der Steigung im ersten Abschnitt größer sein als der Betrag der Steigung im zweiten Abschnitt.

Der erste Abschnitt und der zweite Abschnitt der Hüllkurve der Schraubenfeder 40 erstrecken sich in Federlängsrichtung vorzugsweise gleich weit. Alternativ kann einer aus dem ersten Abschnitt oder dem zweiten Abschnitt der Hüllkurve der Schraubenfeder 40 sich in Federlängsrichtung weiter erstrecken als der andere.

Neben dem ersten Abschnitt und dem zweiten Abschnitt weist die Hüllkurve einen weiteren dritten Abschnitt auf, in welchem die Querschnittsfläche der Hüllkurve in Federlängsrichtung unverändert bleibt. D.h. die Hüllkurve der Schraubenfeder 40 weist im dritten Abschnitt bezogen auf die Längsachse der Schraubenfeder 40 eine Steigung gleich 0 auf. In dem gezeigten Ausführungsbeispiel der Figur 5 ist der dritte Abschnitt zwischen dem ersten Abschnitt und dem zweiten Abschnitt angeordnet, der dritte Abschnitt könnte jedoch auch im Bereich des ersten Endes der Schraubenfeder 40 oder im Bereich des zweiten Endes der Schraubenfeder 40 angeordnet sein.

Die Hüllkurve der Schraubenfeder 40 ist im ersten Abschnitt in Form eines Kegelstumpfs gebildet, welcher sich vom ersten Windungsende 41 in Richtung des zweiten Windungsendes 42 verjüngt. Demgegenüber ist die Hüllkurve der Schraubenfeder 40 im zweiten Abschnitt in Form eines Kegelstumpfs ausgebildet, welcher sich vom zweiten Windungsende 42 in Richtung des ersten Windungsendes 41 verjüngt. D. h. die Hüllkurve der Schraubenfeder 40 verjüngt sich im ersten Abschnitt und im zweiten Abschnitt in Richtung des dritten Abschnitts.

Die Hüllkurve der Schraubenfeder 40 weist in Federlängsrichtung die Querschnittsfläche mit der kleinsten Erstreckung Dₘᵢₙ₋₁ im Bereich des dritten Abschnitts auf. Die Hüllkurve weist im Bereich des dritten Abschnitts in Federlängsrichtung überall eine Querschnittsfläche mit der kleinsten Erstreckung Dₘᵢₙ₋₁ auf. Die Querschnittsfläche mit der weitesten Erstreckung weist die Hüllkurve des Ausführungsbeispiels der Figur 5 am ersten Windungsende 41 und am zweiten Windungsende 42 auf. D. h. die Querschnittsfläche am ersten Windungsende 41 ist gleich groß wie die Querschnittsfläche am zweiten Windungsende 42. Alternativ kann die Querschnittsfläche der Hüllkurve am ersten Windungsende 41 größer oder kleiner sein als die Querschnittsfläche am zweiten Windungsende 42.

Die Querschnittsfläche der Hüllkurve der Schraubenfeder 40 ist vorzugsweise überall kreisförmig ausgebildet. Die Hüllkurve der Schraubenfeder 40 ist bezüglich der Längsachse der Schraubenfeder 40 rotationssymmetrisch ausgebildet und die Hüllkurve der Schraubenfeder 40 ist, soweit die Querschnittsfläche am ersten Windungsende 41 gleich groß ist wie die Querschnittsfläche am zweiten Windungsende 42 und soweit die Steigung der Hüllkurve im ersten Abschnitt und die Steigung der Hüllkurve im zweiten Abschnitt vom Betrag her gleich sind, spiegelsymmetrisch, wobei die Ebene, welche quer zur Längsachse der Schraubenfeder 40 steht und die Schraubenfeder 40 in Federlängsrichtung mittig teilt, die Symmetrieebene der Hüllkurve bildet. D.h. die Längsachse der Schraubenfeder 40 bildet zu der Symmetrieebene der Schraubenfeder 40 die Normale.

Im Ausführungsbeispiel der Figur 5 ist die Hüllkurve der Schraubenfeder 40 durch einen ersten Abschnitt, einen zweiten Abschnitt und einen dritten Abschnitt gekennzeichnet, wobei alle drei Abschnitte einen geraden Verlauf mit konstanter Steigung aufweisen. Die Hüllkurve der Schraubenfeder 40 weist bezogen auf die Federlängsachse der Schraubenfeder einen konvexen Verlauf auf.

Alternativ kann die Hüllkurve der Schraubenfeder 40 über ihre gesamte Länge einen in Bezug auf die Längsachse der Schraubenfeder 40 konvexen Verlauf aufweisen, wobei der erste Abschnitt, der zweite Abschnitt und der dritte Abschnitt der Hüllkurve anstelle eines geraden Verlaufs einen gekrümmten Verlauf aufweisen. Vorzugsweise ist der Krümmungsradius des ersten Abschnitts, des zweiten Abschnitts und des dritten Abschnitts dabei gleich groß.

Das Ausführungsbeispiel der Figur 6 unterscheidet sich von dem Ausführungsbeispiel der Figur 5 lediglich dahingehend, dass die Hüllkurve der Schraubenfeder 50 ausschließlich aus einem ersten Abschnitt und einem zweiten Abschnitt gebildet wird. Die Aussagen zu dem ersten Abschnitt und dem zweiten Abschnitt des Ausführungsbeispiels der Figur 5 gelten auch für das Ausführungsbeispiel der Figur 6, wobei die Querschnittsfläche der Hüllkurve der Schraubenfeder 50 ihre kleinste Erstreckung Dₘᵢₙ₋₁ ebenfalls im mittleren Bereich der Schraubenfeder 50 aufweist. Die kleinste Erstreckung Dₘᵢₙ₋₁ tritt dabei ausschließlich lokal in einer Querschnittsfläche der Hüllkurve. D. h. der dritte Abschnitt des Ausführungsbeispiels der Figur 5 ist in Federlängsrichtung auf eine einzige Ebene reduziert.

Figur 7 offenbart eine Schraubenfeder 60 mit einer glockenförmigen Hüllkurve. Die Schraubenfeder der Figur 7 entspricht weitestgehend der Schraubenfeder 30 der Figur 4, wobei die Hüllkurve der Schraubenfeder 60 anstelle des konischen ersten Abschnitts und des zylindrischen zweiten Abschnitts einen durchgängig gekrümmten Verlauf aufweist. Dabei vergrößert sich der Krümmungsradius in Federlängsrichtung ausgehend von dem ersten Windungsende 61 in Richtung des zweiten Windungsendes 62 fortschreitend. Die Hüllkurve nähert sich dabei in Federlängsrichtung von dem ersten Windungsende 61 ausgehend in Richtung des zweiten Windungsendes 62 asymptotisch einem Kreiszylinder.

Die Querschnittsfläche der Hüllkurve der Schraubenfeder 60 weist ihre kleinste Erstreckung Dₘᵢₙ₋₁ am ersten Windungsende 61 und ihre weiteste Erstreckung Dₘₐₓ₋₁ am zweiten Windungsende 62 auf. Die Querschnittsfläche der Hüllkurve der Schraubenfeder 60 nimmt dabei in Federlängsrichtung streng monoton zu.

Die Hüllkurve der Schraubenfeder 60 ist ebenfalls rotationssymmetrisch bezüglich der Längsachse der Schraubenfeder 60. Die Querschnittsfläche der Hüllkurve der Schraubenfeder 60 ist überall kreisförmig ausgebildet. Dabei ist die Querschnittsfläche der Hüllkurve am ersten Windungsende 61 kleiner als die Querschnittsfläche der Hüllkurve am zweiten Windungsende 62.

Die Figur 9 zeigt eine kreiszylindrische Schraubenfeder aus dem Stand der Technik, welche Block belastet ist. D. h. die Feder der Figur 9 wurde in axialer Richtung soweit belastet, dass die einzelnen Windungen aufeinander aufliegen.

Im Vergleich dazu zeigt die Figur 10 die Schraubenfeder 10 des ersten Ausführungsbeispiels, welche ebenfalls auf Block belastet ist. D. h. die Feder der Figur 10 wurde in axialer Richtung soweit belastet, dass die einzelnen Windungen ineinander eintauchen, d.h. die Schraubenfeder 10 wurde in axialer Richtung soweit belastet, dass die Windungen der Schraubenfeder 10 in radialer Sicht überlappen.

Beide Federn der Figur 9 und der Figur 10 haben im unbelasteten Zustand die gleiche Ausgangslänge. Die beiden Figuren 9 und 10 verdeutlichen, inwiefern der Federweg der Schraubenfeder 10 durch das Ineinandertauchen der einzelnen Windungen der Schraubenfeder 10 vergrößert werden kann, als dies bei einer kreiszylindrischen Feder der Fall ist. Dies hat den zusätzlichen Vorteil, dass die Schraubenfeder 10 für den Einbau in die Pumpe der Figur 1 bei gleichem Federweg wesentlich kürzer ausgestaltet sein kann. Auf diese Weise kann beispielsweise das Verhältnis zwischen der Länge der Schraubenfeder 10 im unbelasteten Zustand und dem äußeren Windungsdurchmesser der Schraubenfeder reduziert werden. Dies führt insbesondere dazu, dass die Schraubenfeder weniger knickanfällig ist.

### Bezugszeichenliste

- 1: Pumpengehäuse
- 2: Förderkammereinlass
- 3: Förderkammerauslass
- 4: Förderglied
- 5: Verstelleinrichtung
- 6: Stellfläche
- 7: Stellstruktur
- 10: Schraubenfeder
- 11: erstes Windungsende
- 12: zweites Windungsende
- 20: Schraubenfeder
- 21: erstes Windungsende
- 22: zweites Windungsende
- 30: Schraubenfeder
- 31: erstes Windungsende
- 32: zweites Windungsende
- 40: Schraubenfeder
- 41: erstes Windungsende
- 42: zweites Windungsende
- 50: Schraubenfeder
- 51: erstes Windungsende
- 52: zweites Windungsende
- 60: Schraubenfeder
- 61: erstes Windungsende
- 62: zweites Windungsende
- S: Windungssteigung
- Dₘₐₓ₋₁: weiteste Erstreckung
- Dₘᵢₙ₋₁: kleinste Erstreckung

## Patentansprüche

1. Pumpe mit verstellbarem Fördervolumen, die Folgendes umfasst:
a. ein Pumpengehäuse (1) mit einer Förderkammer, die einen Förderkammereinlass (2) für ein Fluid und einen Förderkammerauslass (3) für das Fluid aufweist,
b. ein in der Förderkammer drehbares Förderglied (4) zur Förderung des Fluids,
c. eine Verstelleinrichtung (5)
i. mit einer zur Verstellung des Fördervolumens der Pumpe im Pumpengehäuse (1) hin und her beweglich gelagerten Stellstruktur (7),
ii. und einer Schraubenfeder (10; 20; 30; 40; 50; 60) zur Beaufschlagung der Stellstruktur (7) mit einer in eine Stellrichtung wirkenden Federkraft, wobei
d. die Windungen der Schraubenfeder (10; 20; 30; 40; 50; 60) von einer außen an der Schraubenfeder (10; 20; 30; 40; 50; 60) anliegenden Hüllkurve umschlossen werden,
e. wobei sich die quer zur Federlängsrichtung gemessene Querschnittsfläche der Hüllkurve in Federlängsrichtung fortschreitend ändert,
**dadurch gekennzeichnet,**
f. **dass** die Hüllkurve über die gesamte Länge der Schraubenfeder (10; 40; 50; 60) einen konkaven Verlauf bezogen auf die Federlängsrichtung aufweist und der konkave Verlauf in Umfangsrichtung der Schraubenfeder (10; 40; 50; 60) überall konkav ist und
g. **dass** die Querschnittsfläche der Hüllkurve in Federlängsrichtung in einem mittleren Bereich der Schraubenfeder (10; 40; 50) maximal ist.

2. Pumpe nach Anspruch 1, **dadurch gekennzeichnet, dass** die Querschnittsfläche der Hüllkurve in Federlängsrichtung über die gesamte Länge der Schraubenfeder (10; 20; 30; 40; 50; 60) monoton abnimmt oder zunimmt.

3. Pumpe nach einem der vorhergehenden Ansprüche, **dadurch gekennzeichnet, dass** der Krümmungsradius der Hüllkurve vom Betrag überall größer 3 mm ist.

4. Pumpe nach einem der vorhergehenden Ansprüche, **dadurch gekennzeichnet, dass** die Querschnittsfläche der Hüllkurve an einem ersten Windungsende (11; 41; 51) der Schraubenfeder (10; 40; 50) und die Querschnittsfläche der Hüllkurve an einem zweiten Windungsende (12; 42; 52) der Schraubenfeder (10; 40; 50) gleich groß ist.

5. Pumpe nach einem der vorhergehenden Ansprüche, **dadurch gekennzeichnet, dass** die Hüllkurve rotationssymmetrisch ist und die Federlängsachse der Schraubenfeder (10; 20; 30; 40; 50; 60) die Symmetrieachse der Hüllkurve bildet.

6. Pumpe nach einem der vorhergehenden Ansprüche, **dadurch gekennzeichnet, dass** die Hüllkurve in Federlängsrichtung eine Querschnittsfläche mit einer weitesten Erstreckung (Dₘₐₓ₋₁), welche kleiner 5 cm ist, aufweist und/oder dass die Hüllkurve in Federlängsrichtung eine Querschnittsfläche mit einer kleinsten Erstreckung (Dₘᵢₙ₋₁), welche größer 0,5 cm ist, aufweist.

7. Pumpe nach einem der vorhergehenden Ansprüche, **dadurch gekennzeichnet, dass** die Windungssteigung (s) der Schraubenfeder (10; 20; 30; 40; 50; 60) über die Länge der Schraubenfeder (10; 20; 30; 40; 50; 60) im unbelasteten Zustand konstant ist.

8. Pumpe nach einem der vorhergehenden Ansprüche, **dadurch gekennzeichnet, dass** die Windungssteigung (s) der Schraubenfeder (10; 20; 30; 40; 50; 60) im unbelasteten Zustand der Schraubenfeder (10; 20; 30; 40; 50; 60) kleiner 1 cm ist.

9. Pumpe nach einem der vorhergehenden Ansprüche, **dadurch gekennzeichnet, dass** die Schraubenfeder (10; 20; 30; 40; 50; 60) eine Schraubendruckfeder ist, deren Kennlinie sowohl einen linearen Abschnitt als auch einen progressiven Abschnitt aufweist.

10. Pumpe nach einem der vorhergehenden Ansprüche, **dadurch gekennzeichnet, dass** die Hüllkurve zumindest im unbelasteten Zustand eine Tonne bildet.

## Claims

1. A pump having an adjustable delivery volume, comprising:
a. a pump housing (1) featuring a delivery chamber which comprises a delivery chamber inlet (2) for a fluid and a delivery chamber outlet (3) for the fluid;
b. a delivery member (4), which can be rotated within the delivery chamber, for delivering the fluid;
c. an adjusting device (5)
i. featuring a setting structure (7), which is mounted such that it can move back and forth within the pump housing (1) in order to adjust the delivery volume of the pump,
ii. and a helical spring (10; 20; 30; 40; 50; 60) for applying a spring force, which acts in a setting direction, to the setting structure (7), wherein
d. the windings of the helical spring (10; 20; 30; 40; 50; 60) are enclosed by an envelope lying on the outside of the helical spring (10; 20; 30; 40; 50; 60),
e. wherein the cross-sectional area of the envelope as measured transversely with respect to the longitudinal direction of the spring changes progressively in the longitudinal direction of the spring,
**characterised in that**
f. the envelope exhibits a concave profile in relation to the longitudinal direction of the spring over the entire length of the helical spring (10; 40; 50; 60), and the concave profile is concave throughout in the circumferential direction of the helical spring (10; 40; 50; 60), and **in that**
g. the cross-sectional area of the envelope is at a maximum in a central region of the helical spring (10; 40; 50) in the longitudinal direction of the spring.

2. The pump according to claim 1, **characterised in that** the cross-sectional area of the envelope decreases or increases monotonically in the longitudinal direction of the spring over the entire length of the helical spring (10; 20; 30; 40; 50; 60).

3. The pump according to any one of the preceding claims, **characterised in that** the magnitude of the radius of curvature of the envelope is greater than 3 mm throughout.

4. The pump according to any one of the preceding claims, **characterised in that** the cross-sectional area of the envelope at a first winding end (11; 41; 51) of the helical spring (10; 40; 50) and the cross-sectional area of the envelope at a second winding end (12; 42; 52) of the helical spring (10; 40; 50) are identical in size.

5. The pump according to any one of the preceding claims, **characterised in that** the envelope is rotationally symmetrical, and the longitudinal axis of the helical spring (10; 20; 30; 40; 50; 60) forms the axis of symmetry of the envelope.

6. The pump according to any one of the preceding claims, **characterised in that** the envelope exhibits a cross-sectional area having a furthest extent (Dₘₐₓ₋₁) which is smaller than 5 cm in the longitudinal direction of the spring, and/or **in that** the envelope exhibits a cross-sectional area having a smallest extent (Dₘᵢₙ₋₁) which is greater than 0.5 cm in the longitudinal direction of the spring.

7. The pump according to any one of the preceding claims, **characterised in that** the winding pitch (s) of the helical spring (10; 20; 30; 40; 50; 60) is constant over the length of the helical spring (10; 20; 30; 40; 50; 60) when not exposed to a load.

8. The pump according to any one of the preceding claims, **characterised in that** the winding pitch (s) of the helical spring (10; 20; 30; 40; 50; 60) is smaller than 1 cm when the helical spring (10; 20; 30; 40; 50; 60) is not exposed to a load.

9. The pump according to any one of the preceding claims, **characterised in that** the helical spring (10; 20; 30; 40; 50; 60) is a helical compression spring, the characteristic curve of which comprises a linear portion and a progressive portion.

10. The pump according to any one of the preceding claims, **characterised in that** the envelope forms a barrel, at least when the helical spring is not exposed to a load.

## Revendications

1. Pompe à volume de refoulement réglable, comprenant :
a. un boîtier de pompe (1) avec une chambre de refoulement comportant une entrée de chambre de refoulement (2) pour un fluide et une sortie de chambre de refoulement (3) pour le fluide ;
b. un élément de refoulement (4) pouvant tourner dans la chambre de refoulement pour refouler le fluide ;
c. un dispositif de réglage (5)
i. avec une structure d'actionnement (7) montée de manière mobile en va-et-vient dans le boîtier de pompe (1) pour régler le volume de refoulement de la pompe
ii. et un ressort hélicoïdal (10 ; 20 ; 30 ; 40 ; 50 ; 60) pour appliquer une force de ressort agissant dans une direction d'actionnement à la structure d'actionnement (7),
d. les spires du ressort hélicoïdal (10 ; 20 ; 30 ; 40 ; 50 ; 60) étant enserrées par une enveloppe s'appuyant sur l'extérieur du ressort hélicoïdal (10 ; 20 ; 30 ; 40 ; 50 ; 60),
e. la section transversale de l'enveloppe mesurée transversalement à la direction longitudinale du ressort se modifiant progressivement dans la direction longitudinale du ressort,
**caractérisée en ce que**
f. l'enveloppe présente une évolution concave par rapport à la direction longitudinale du ressort sur toute la longueur du ressort hélicoïdal (10 ; 40 ; 50 ; 60), l'évolution concave étant partout concave dans la direction circonférentielle du ressort hélicoïdal (10 ; 40 ; 50 ; 60), et **en ce que**
g. la section transversale de l'enveloppe dans la direction longitudinale du ressort est maximale dans une région centrale du ressort hélicoïdal (10 ; 40 ; 50).

2. Pompe selon la revendication 1, **caractérisée en ce que** la section transversale de l'enveloppe dans la direction longitudinale du ressort diminue ou augmente de manière monotone sur toute la longueur du ressort hélicoïdal (10 ; 20 ; 30 ; 40 ; 50 ; 60).

3. Pompe selon l'une quelconque des revendications précédentes, **caractérisée en ce que** la valeur du rayon de courbure de l'enveloppe est partout supérieur à 3 mm.

4. Pompe selon l'une quelconque des revendications précédentes, **caractérisée en ce que** la section transversale de l'enveloppe à une première extrémité de spire (11 ; 41 ; 51) du ressort hélicoïdal (10 ; 40 ; 50) et la section transversale de l'enveloppe à une seconde extrémité de spire (12 ; 42 ; 52) du ressort hélicoïdal (10 ; 40 ; 50) est de la même grandeur.

5. Pompe selon l'une quelconque des revendications précédentes, **caractérisée en ce que** l'enveloppe est à symétrie de rotation et l'axe longitudinal du ressort hélicoïdal (10 ; 20 ; 30 ; 40 ; 50 ; 60) forme l'axe de symétrie de l'enveloppe.

6. Pompe selon l'une quelconque des revendications précédentes, **caractérisée en ce que** l'enveloppe dans la direction longitudinale du ressort présente une section transversale dont une plus grande étendue (Dₘₐₓ₋₁) est inférieure à 5 cm et / ou une plus petite étendue (Dₘᵢₙ₋₁) est supérieure à 0,5 cm.

7. Pompe selon l'une quelconque des revendications précédentes, **caractérisée en ce que** la pente de spire (s) du ressort hélicoïdal (10 ; 20 ; 30 ; 40 ; 50 ; 60) est constant sur la longueur du ressort hélicoïdal (10 ; 20 ; 30 ; 40 ; 50 ; 60) à l'état non chargé.

8. Pompe selon l'une quelconque des revendications précédentes, **caractérisée en ce que** la pente de spire (s) du ressort hélicoïdal (10 ; 20 ; 30 ; 40 ; 50 ; 60) est inférieure à 1 cm à l'état non chargé du ressort hélicoïdal (10 ; 20 ; 30 ; 40 ; 50 ; 60).

9. Pompe selon l'une quelconque des revendications précédentes, **caractérisée en ce que** le ressort hélicoïdal (10 ; 20 ; 30 ; 40 ; 50 ; 60) est un ressort hélicoïdal de compression dont la courbe caractéristique présente aussi bien une section linéaire qu'une section progressive.

10. Pompe selon l'une quelconque des revendications précédentes, **caractérisée en ce que** l'enveloppe forme un fût au moins à l'état non chargé.
